# FASCICULE DE BREVET EUROPEEN

(11) **EP 3 272 588 B1**
(45) Date de publication et mention de la délivrance du brevet: **15.05.2019**
(21) Numéro de dépôt: 17180750.6
(22) Date de dépôt: 11.07.2017
(51) Int. Cl.: B60R 11/02, B60R 21/055

(54) **SUPPORT POUR DISPOSITIF, TEL UN MOYEN D'AFFICHAGE**
HALTERUNG FÜR VORRICHTUNG, WIE EINEM ANZEIGEMITTEL
SUPPORT FOR A DEVICE, SUCH AS A DISPLAY MEANS

(30) Priorité: 21.07.2016 FR 1656963
(43) Date de publication de la demande: 24.01.2018
(73) Titulaire: Faurecia Intérieur Industrie, 92000 Nanterre (FR)
(72) Inventeur: MOREL, Jean-Pierre, 95650 Boissy l'Aillerie (FR)
(74) Mandataire: Lavoix

(56) Documents cités:
- EP-A1- 3 045 340
- DE-A1-102013 016 805
- US-B1- 7 597 393

## Description

La présente invention se rapporte à un support pour dispositif, tel un moyen d'affichage, apte à supporter un tel dispositif relativement à un bâti.

Selon un mode de réalisation, le bâti est une planche de bord de véhicule automobile, et le dispositif est un moyen d'affichage. Tout dispositif ainsi disposé relativement à une planche de bord doit pouvoir s'escamoter sous l'effet d'un choc pouvant être occasionné par la tête d'un occupant lors d'une collision. Ceci est, par exemple, défini par la norme ECE21 en Europe ou la norme FMVSS201 aux Etats-Unis.

Jusqu'à présent, les dispositifs concernés ont satisfait aux exigences de cette norme en utilisant une mesure dérogatoire : la présence d'un airbag, qui s'interpose entre la tête et le dispositif, supprime le risque de choc de la tête contre le dispositif. Cependant, certains véhicules ne comportent pas d'airbag. Le problème qui se pose alors est de permettre au dispositif de s'escamoter en cas de choc avec la tête, en présentant un effort résistant réduit afin de limiter l'effet vulnérant pour la tête. Le moyen permettant un tel escamotage doit cependant assurer un maintien suffisant du dispositif dans les autres cas et plus particulièrement être apte à résister à une traction.

EP3045340A1 divulgue un dispositif d'affichage embarqué dans un véhicule et comprenant un écran d'affichage et un dispositif support sur lequel l'écran d'affichage est monté.

Afin de répondre au problème précité, l'invention a pour objet un support pour un dispositif, tel un moyen d'affichage, selon la revendication 1.

Selon une autre caractéristique, le premier effort est égal à 80g sous 3 ms et le deuxième effort est égal à 55 daN.

Selon une autre caractéristique, le rapprochement des deux platines s'effectue selon une rotation.

Selon une autre caractéristique, le deuxième moyen de liaison est encore apte à n'offrir sensiblement aucune résistance à un effort exercé selon la première direction.

Selon une autre caractéristique, le premier moyen de liaison est un moyen déformable disposé entre les deux platines.

Selon une autre caractéristique, la première platine, la deuxième platine et le premier moyen de liaison sont réalisés de matière dans une tôle découpée, le premier moyen étant formé par un pli de ladite tôle découpée.

Selon une autre caractéristique, le premier effort est calibré en faisant varier la matière de la tôle, l'épaisseur de la tôle au droit du pli, la longueur du pli, le rayon de cintrage au niveau du pli, et/ou le formage de raidisseurs au niveau du pli.

Selon une autre caractéristique, la (ou les) première(s) glissière(s) dudit au moins un élément et la première platine sont réalisés de matière dans une tôle découpée, et la (ou les) deuxième(s) glissière(s) dudit au moins un élément et la deuxième platine sont réalisés de matière dans une tôle découpée, le deuxième moyen étant formé par l'assemblage d'une première glissière et d'une deuxième glissière en regard, au moyen d'un moyen d'assemblage.

L'invention concerne encore un véhicule automobile, comprenant une planche de bord, un moyen d'affichage, et un tel support, la planche de bord étant le bâti, et le moyen d'affichage étant le dispositif, afin de supporter le moyen d'affichage relativement à la planche de bord.

D'autres caractéristiques, détails et avantages de l'invention ressortiront plus clairement de la description détaillée donnée ci-après à titre indicatif en relation avec des dessins sur lesquels :
- la figure 1 illustre en vue de profil un bâti, un dispositif et un support, en position nominale,
- la figure 2 illustre en vue de profil les mêmes bâti, dispositif et support, en position escamotée,
- la figure 3 illustre en vue perspective un mode de réalisation d'un support,
- la figure 4 illustre en vue perspective ce même support dans son environnement.

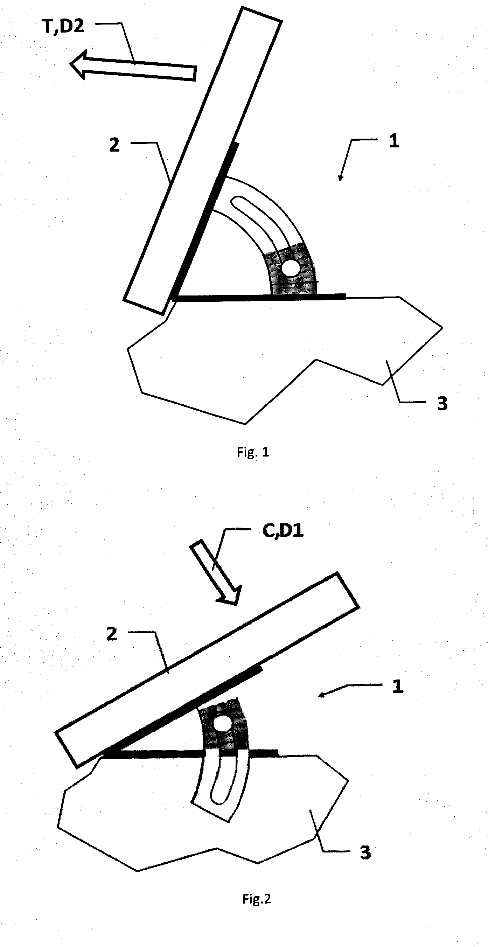

Le but de l'invention est de permettre de supporter un dispositif 2 relativement à un bâti 3. Un dispositif 2 peut être un afficheur, par exemple de grand format, soit un écran présentant une diagonale de l'ordre de 21cm (8"). Un tel supportage peut être réalisé au moyen d'un support 1 disposé entre le dispositif 2 et le bâti 3. La figure 1 illustre, en vue de profil, une configuration nominale d'utilisation. Dans cette configuration, le dispositif 2 est disposé de manière à pouvoir être utilisé. Ainsi, dans le cas d'un afficheur, il est positionné et orienté de manière à présenter sa face parlante à un utilisateur. La mise en place du dispositif 2 doit vérifier deux contraintes.

D'une part, en cas d'accident, la tête de l'utilisateur peut venir percuter le dispositif 2. Au cours d'un tel choc C, typiquement appliqué selon une première direction D1, le dispositif 2 ne doit pas offrir une résistance trop importante, afin de limiter les risques de blessures de la tête. Aussi la résistance au choc C est au plus égale à un premier effort. Pour cela il est avantageux que le dispositif 2 puisse s'escamoter sous l'effet d'un tel choc C, tel qu'illustré à la figure 2.

D'autre part, en dehors du cas précédent, dans tous les autres cas d'usage, le dispositif 2 doit être maintenu dans ses position et orientation nominales, telles qu'illustrées à la figure 1 et doit de plus être apte à résister à une traction T, exercée selon une deuxième direction D2. Une telle traction T est typiquement dimensionnée pour correspondre à un effort occasionné par un utilisateur s'extrayant de son siège en saisissant le dispositif 2.

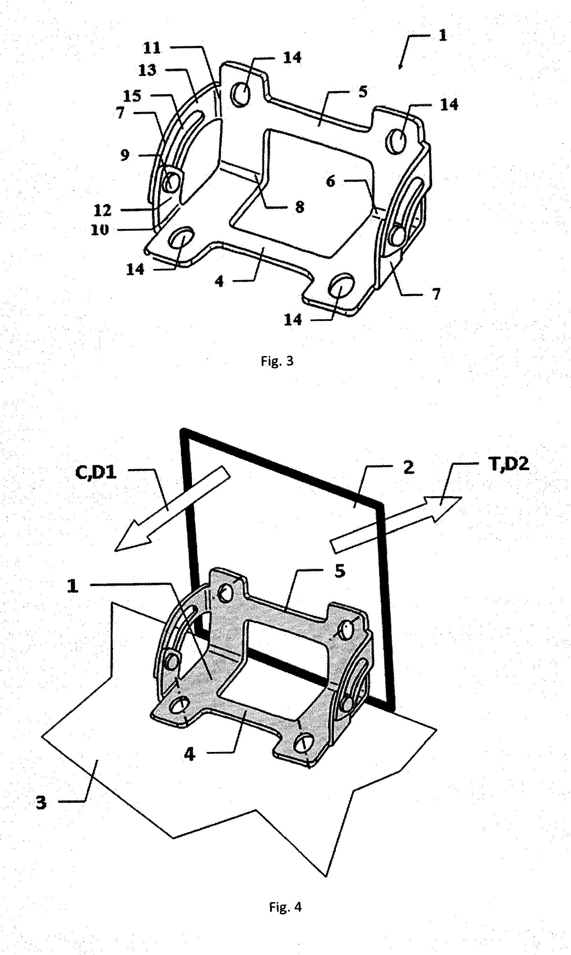

Ceci est réalisé, selon l'invention, au moyen d'un support 1 apte à supporter le dispositif 2 relativement au bâti 3. Selon un mode de réalisation, plus particulièrement illustré aux figures 3 et 4, le support 1 comprend une première platine 4, une deuxième platine 5 et un moyen de liaison 6, 7 de la deuxième platine 5 avec la première platine 4.

La première platine 4 assure l'interface du support 1 avec le bâti 3. Aussi la première platine 4 est apte à être fixée au bâti 3. Sa forme peut être quelconque. Elle est typiquement adaptée pour correspondre avec la forme du bâti 3 à l'endroit de l'assemblage, afin de faciliter ledit assemblage. Dans le mode de réalisation illustré, la première platine 4 est sensiblement plane. Elle peut encore être largement évidée afin d'alléger le support 1. Elle comprend ici deux trous 14 permettant le passage de moyens de fixation, tels des vis, rivets, ou autres.

La deuxième platine 5 assure l'interface du support 1 avec le dispositif 2. Aussi la deuxième platine 5 est apte à être fixée au dispositif 2, typiquement par sa face arrière opposée à sa face parlante. Sa forme peut être quelconque. Elle est typiquement adaptée pour correspondre avec la forme de la face arrière du dispositif 2 afin de faciliter l'assemblage. Dans le mode de réalisation illustré, la deuxième platine 5 est sensiblement plane. Elle peut encore être largement évidée afin d'alléger le support 1. Elle comprend ici deux trous 14 permettant le passage de moyens de fixation, tels des vis, rivets, ou autres.

Le moyen de liaison 6, 7 assure la liaison entre les deux platines 4, 5. Il définit ainsi la position et l'orientation de la deuxième platine 5 relativement à la première platine 4 et la position et l'orientation du dispositif 2 relativement au bâti 3. Le moyen de liaison 6, 7 assure la réalisation des deux contraintes précédemment décrites.

Ainsi le moyen de liaison 6,7 est apte à permettre un rapprochement des deux platines 4, 5, sous l'effet d'un choc C, exercé sur le dispositif 2 et tendant à rapprocher la deuxième platine 5 de la première platine 4, afin de permettre un escamotage du dispositif 2. Ceci doit se faire en offrant une résistance au plus égale à un premier effort. Le moyen de liaison 6, 7 est encore apte à empêcher un éloignement des deux platines 4, 5, sous l'effet d'une traction T, exercée sur le dispositif 2 et tendant à éloigner la deuxième platine 5 de la première platine 4, au moins tant que ladite traction T est au plus égale à un deuxième effort.

Afin que le choc C ne soit pas vulnérant, ou du moins dans une proportion acceptable au sens de la norme ECE21, le premier effort est tel qu'il permette de garantir que la tête du passager impactant l'afficheur ne subisse pas une décélération supérieure à 80g pendant une durée d'au plus 3 ms. Afin de pouvoir supporter une auto-extraction d'un utilisateur de son siège, le deuxième effort F2 est pris égal à 55 daN. Ce deuxième effort peut-être plus ou moins élevé notamment en fonction du type de véhicule, de la disposition de l'afficheur dans le véhicule, de la volonté de qualité perçue voulue par le constructeur de véhicule.

Selon un mode de réalisation préféré, le moyen de liaison 6, 7 comprend deux moyens de liaison, un premier moyen de liaison 6 assurant principalement l'escamotage sous l'effet du choc C et un deuxième moyen de liaison 7 assurant principalement la résistance à la traction T.

Le mouvement de déformation du support 1 sous l'effet d'un choc C peut être quelconque. Ainsi, selon un mode de réalisation possible, un support 1 selon l'invention peut se déformer selon une translation.

Selon un mode de réalisation préféré, le rapprochement des deux platines 4, 5, qui permet l'escamotage, s'effectue selon une rotation.

Ceci suppose que le moyen de liaison 6, 7 comprenne un premier moyen de liaison 6 disposé entre les deux platines 4, 5, et réalisant une articulation entre elles. Ce premier moyen de liaison 6 est apte à permettre le rapprochement des deux platines 4, 5, sous l'effet d'un choc C exercé sur le dispositif 2 selon une première direction D1 tendant à rapprocher, par rotation, la deuxième platine 5 de la première platine 4. Ce faisant, ledit premier moyen de liaison 6 ne doit pas offrir une résistance au rapprochement supérieure au premier effort.

Pour résister à la traction T, le moyen de liaison 6, 7 comprend encore un deuxième moyen de liaison 7 apte à empêcher un éloignement des deux platines 4, 5, sous l'effet de la traction T exercée sur le dispositif 2 selon la deuxième direction D2, tendant à éloigner la deuxième platine 5 de la première platine 4. Ce deuxième moyen de liaison 7 doit être dimensionné pour résister à une traction T au plus égale au deuxième effort.

Avantageusement, le deuxième moyen de liaison 7 est encore apte à n'offrir sensiblement aucune résistance à un effort exercé selon la première direction D1. Ainsi le premier moyen de liaison 6 assure seul la réponse à un choc C, facilitant ainsi son dimensionnement, relativement au premier effort.

Selon un mode de réalisation, le premier moyen de liaison 6 comprend une articulation entre les deux platines 4, 5 afin de permettre la rotation. La contrainte d'effort résistant inférieur au premier effort est alors assurée par un autre moyen, tel par exemple un amortisseur.

Selon un mode de réalisation préféré, le premier moyen de liaison 6 est réalisé par un moyen déformable disposé entre les deux platines 4, 5. Avantageusement la déformation autorise le rapprochement en rotation des deux platines 4, 5, tandis que l'énergie nécessaire à la déformation fait fonction d'amortisseur.

Aussi, selon un mode de réalisation encore préféré, la première platine 4, la deuxième platine 5 et le premier moyen de liaison 6 sont réalisés de matière dans une tôle découpée. Un tel mode de réalisation permet de former le premier moyen 6 au moyen d'un pli 8 de ladite tôle réalisé entre les deux platines 4, 5. Ce pli 8 permet par son angulation de définir l'orientation relative des deux platines 4, 5. Ce pli 8 définit encore l'axe de rotation suivi lors du mouvement de rapprochement des deux platines 4, 5. Un tel pli 8 permet ainsi le mouvement d'escamotage par pliage, permettant le rapprochement des platines 4, 5 sous l'effet du choc C, tout en contribuant au maintien en position en l'absence de choc. L'énergie nécessaire à la déformation de la matière lors du pliage quantifie l'effort de résistance offert par le support 1.

Ainsi, pour obtenir une résistance au plus égale à un premier effort donné, il est possible et aisé de dimensionner le support 1 et plus particulièrement le premier moyen de liaison 6, en faisant varier : la matière de la tôle, l'épaisseur de la tôle au droit du pli 8, la longueur du pli 8, le rayon de cintrage au niveau du pli 8, et/ou le formage de raidisseurs au niveau du pli 8. La longueur de pli 8 peut être variée en variant la longueur du support 1 au droit du pli 8 et/ou en évidant le support 1 en pratiquant une lumière dans ledit pli 8, tel qu'illustré aux figures 3,4. Un raidisseur (non représenté) peut être une pièce additionnelle de type équerre, ou encore une encoche réalisée de matière, typiquement par formage de ladite tôle. Un tel mode de réalisation assure de plus une excellente répétabilité de la valeur de la résistance ainsi obtenue.

Un tel mode de réalisation est encore avantageux en ce que, un éventuel choc C sur le dispositif 2, occasionne une déformation sensiblement irréversible du support 1. Ceci est avantageux en termes de sécurité, en ce que le support 1, suite à un tel choc peut difficilement être réutilisé, et doit avantageusement être remplacé.

Afin d'assurer la résistance à la traction T, un deuxième moyen de liaison 7 comprend avantageusement au moins un élément dont une première extrémité 10 est solidaire de la première platine 4 et une deuxième extrémité 11 est solidaire de la deuxième platine 5, ledit élément étant rigide en traction et souple en compression. Un tel « tendon » ou « tendeur » peut être réalisé selon différents modes. Il peut comprendre un câble, une chaîne, une sangle ou équivalent, présentant une résistance à une traction, tendant à éloigner les deux extrémités 10, 11 l'une de l'autre et étant souple à une compression tendant à rapprocher les deux extrémités 10, 11. Un tel élément peut encore comprendre un vérin en butée en traction et libre en compression. Un tel élément peut encore comprendre un moyen télescopique en butée en traction, et glissant ou encore apte à se déformer, à se plier, lorsque soumis à une compression.

Selon l'invention, et comme illustré aux figures 3, 4, un tel élément comprend une première glissière 12 solidaire de la première platine 4, une deuxième glissière 13 solidaire de la deuxième platine 5, et un moyen d'assemblage 9 assurant un assemblage coulissant des deux glissières 12, 13. Tel qu'illustré aux figures 3, 4, un tel élément est conformé de telle manière à permettre un coulissement relatif des deux glissières 12, 13 en compression, et à s'opposer à un coulissement relatif des deux glissières 12,13 en traction, typiquement en étant en butée.

Selon un mode de réalisation encore préféré, la (ou les) première(s) glissière(s) 12 dudit au moins un élément et la première platine 4 sont réalisés de matière dans une tôle découpée, et la (ou les) deuxième(s) glissière(s) 13 dudit au moins un élément et la deuxième platine 5 sont réalisés de matière dans une tôle découpée. Le moyen d'assemblage 9, ici une goupille, est fixe relativement à une des glissières, ici la première glissière 12, et est apte à coulisser de manière prisonnière dans une fente 15 pratiquée dans la deuxième glissière 13. Le moyen d'assemblage 9 assemble les deux glissières 12,13 et forme avec elles le deuxième moyen 7.

La (ou les) première(s) glissière(s) 12 peut/peuvent avantageusement être réalisée(s) de matière avec la première platine 4. La (ou les) deuxième(s) glissière(s) 13 peut/peuvent avantageusement être réalisée(s) de matière avec la deuxième platine 5. En combinant ces deux caractéristiques avec de plus une réalisation des deux platines 4, 5 de matière, la quasi-totalité du support 1 (à l'exclusion du moyen d'assemblage 9) peut avantageusement être réalisée de matière à partir d'une unique pièce de tôle, par découpe et pliage/formage, soit selon un procédé de fabrication simple à mettre en oeuvre. Cette pièce peut, comme ici, être initialement plane. Ce mode de réalisation simple, associé à une matière courante, garantit avantageusement un support 1 à très bas coût.

Une utilisation particulièrement intéressante d'un tel support 1 prend place dans un véhicule, tel un véhicule automobile, comprenant une planche de bord et un moyen d'affichage. La planche de bord tient lieu de bâti 3, et le moyen d'affichage est le dispositif 2. Un support 1 selon l'invention permet avantageusement de supporter le moyen d'affichage relativement à la planche de bord.

## Revendications

1. Support (1) pour un dispositif (2), tel un moyen d'affichage, apte à supporter un dispositif (2) relativement à un bâti (3), comprenant une première platine (4), apte à être fixée au bâti (3), une deuxième platine (5) apte à être fixée au dispositif (2), et un moyen de liaison (6, 7) de la deuxième platine (5) avec la première platine (4), dans lequel le moyen de liaison (6, 7) est apte à permettre un rapprochement des deux platines (4, 5), sous l'effet d'un choc (C), exercé sur le dispositif (2) et tendant à rapprocher la deuxième platine (5) de la première platine (4), en offrant une résistance au plus égale à un premier effort, et est encore apte à empêcher un éloignement des deux platines (4, 5), sous l'effet d'une traction (T), exercée sur le dispositif (2) et tendant à éloigner la deuxième platine (5) de la première platine (4), au moins tant que ladite traction (T) est au plus égale à un deuxième effort, dans lequel
- le moyen de liaison (6, 7) comprend un premier moyen de liaison (6) apte à permettre le rapprochement des deux platines (4, 5), sous l'effet d'un choc (C) exercé sur le dispositif (2) selon une première direction (D1) tendant à rapprocher la deuxième platine (5) de la première platine (4), en offrant une résistance au plus égale à un premier effort, et un deuxième moyen de liaison (7) apte à empêcher un éloignement des deux platines (4, 5), sous l'effet d'une traction (T) exercée sur le dispositif (2) selon une deuxième direction (D2), tendant à éloigner la deuxième platine (5) de la première platine (4), au moins tant que ladite traction est au plus égale à un deuxième effort,
- le deuxième moyen de liaison (7) comprend au moins un élément dont une première extrémité (10) est solidaire de la première platine (4) et une deuxième extrémité (11) est solidaire de la deuxième platine (5), ledit élément étant rigide en traction et souple en compression,
**caractérisé en ce que**
- l'élément comprend une première glissière (12) solidaire de la première platine (4), une deuxième glissière (13) solidaire de la deuxième platine (5), et un moyen d'assemblage (9) des deux glissières (12, 13), de telle manière à permettre un coulissement relatif des deux glissières (12, 13) en compression, et à s'opposer à un coulissement relatif des deux glissières (12, 13) en traction.

2. Support (1) selon la revendication 1, dans lequel le rapprochement des deux platines (4,5) s'effectue selon une rotation.

3. Support (1) selon la revendication 1 ou la revendication 2, dans lequel le deuxième moyen de liaison (7) est encore apte à n'offrir sensiblement aucune résistance à un effort exercé selon la première direction (D1).

4. Support (1) selon l'une quelconque des revendications précédentes, dans lequel le premier moyen de liaison (6) est un moyen déformable disposé entre les deux platines (4,5).

5. Support (1) selon la revendication 4, dans lequel la première platine (4), la deuxième platine (5) et le premier moyen de liaison (6) sont réalisés de matière dans une tôle découpée, le premier moyen (6) étant formé par un pli (8) de ladite tôle découpée.

6. Support (1) selon l'une quelconque des revendications précédentes, dans lequel la (ou les) première(s) glissière(s) (12) dudit au moins un élément et la première platine (4) sont réalisés de matière dans une tôle découpée, et la (ou les) deuxième(s) glissière(s) (13) dudit au moins un élément et la deuxième platine (5) sont réalisés de matière dans une tôle découpée, le deuxième moyen (7) étant formé par l'assemblage d'une première glissière (12) et d'une deuxième glissière (13) en regard, au moyen d'un moyen d'assemblage (9).

7. Véhicule, tel un véhicule automobile, comprenant une planche de bord et un moyen d'affichage, **caractérisé en ce qu'**il comprend encore un support (1) selon l'une quelconque des revendications précédentes, la planche de bord étant le bâti (3), et le moyen d'affichage étant le dispositif (2), afin de supporter le moyen d'affichage relativement à la planche de bord.

## Patentansprüche

1. Halterung (1) für eine Vorrichtung (2), wie z.B. ein Anzeigemittel, die imstande ist, eine Vorrichtung (2) relativ zu einem Unterbau (3) halten, aufweisend eine erste Platte (4), die imstande ist, an dem Unterbau (3) fixiert zu sein, eine zweite Platte (5), die imstande ist, an der Vorrichtung (2) fixiert zu sein, und ein Mittel zur Verbindung (6, 7) der zweiten Platte (5) mit der ersten Platte (4), wobei das Verbindungs-Mittel (6, 7) imstande ist, eine Annäherung der beiden Platten (4, 5) bei der Wirkung eines Stoßes (C) zu erlauben, der auf die Vorrichtung (2) ausgeübt wird und dazu tendiert, die zweite Platte (5) der ersten Platte (4) anzunähern, unter Bieten eines Widerstands, der höchstens gleich einer ersten Kraft ist, und außerdem imstande ist, eine Trennung der beiden Platten (4, 5) bei der Wirkung eines Zugs (T), der auf die Vorrichtung (2) ausgeübt wird und dazu tendiert, die zweiten Platte (5) von der ersten Platte (4) zu entfernen, zu verhindern wenigstens zumindest solange der besagte Zug (T) höchstens gleich einer zweiten Kraft ist, wobei
- das Verbindungs-Mittel (6, 7) aufweist ein erstes Verbindungs-Mittel (6), das imstande ist, die Annäherung der beiden Platten (4, 5) zu erlauben, bei der Wirkung eines Stoßes (C), der auf die Vorrichtung (2) ausgeübt wird entlang einer ersten Richtung (D1) und dazu tendiert, die zweite Platte (5) der ersten Platte (4) anzunähern, unter Bieten eines Widerstands, der höchstens gleich einer ersten Kraft ist, und ein zweites Verbindungs-Mittel (7), das imstande ist, ein Trennen der beiden Platinen (4, 5) bei der Wirkung eines Zugs (T), der auf die Vorrichtung (2) ausgeübt wird entlang einer zweiten Richtung (D2) und dazu tendiert, die zweite Platte (5) von der ersten Platte (4) zu entfernen, zu verhindern zumindest solange der besagte Zug höchstens gleich einer zweiten Kraft ist,
- das zweite Verbindungs-Mittel (7) wenigstens ein Element aufweist, von dem ein erstes Ende (10) fest mit der ersten Platte (4) verbunden ist und ein zweiten Ende (11) fest mit der zweiten Platte (5) verbunden ist, wobei das besagte Element zugsteif und druckweich ist,
**dadurch gekennzeichnet, dass**
das Element aufweist ein erstes Führungsteil (12), das fest mit der ersten Platte (4) verbunden ist, ein zweites Führungsteil (13), das fest mit der zweiten Platte (5) verbunden ist, und ein Mittel zur Zusammenfügung (9) der beiden Führungsteile (12, 13), derart, dass eine Relativverschiebung der beiden Führungsteile (12, 13) bei Druck ermöglicht ist und das einer Relativverschiebung der beiden Führungsstücke (12, 13) bei Zug entgegengewirkt wird.

2. Halterung (1) gemäß Anspruch 1, wobei die Annäherung der beiden Platten (4, 5) entlang einer Rotation erfolgt.

3. Halterung (1) gemäß Anspruch 1 oder Anspruch 2, wobei das zweite Verbindungs-Mittel (7) ferner imstande ist, im Wesentlichen keinen Widerstand zu bieten bei einer Kraft, die in die erste Richtung (D1) ausgeübt wird.

4. Halterung (1) gemäß irgendeinem der vorhergehenden Ansprüche, wobei das erste Verbindungs-Mittel (6) ein verformbares Mittel ist, das zwischen den beiden Platten (4, 5) angeordnet ist.

5. Halterung (1) gemäß Anspruch 4, wobei die erste Platte (4), die zweite Platte (5) und das erste Verbindungs-Mittel (6) einstückig aus einem geschnittenen Blech gemacht sind, wobei das erste Mittel (6) von einem Knick (8) des besagten geschnittenen Blechs gebildet ist.

6. Halterung (1) gemäß irgendeinem der vorhergehenden Ansprüche, wobei das (oder die) erste(n) Führungsteil(e) (12) des besagten wenigstens einen Elements und der ersten Platte (4) einstückig aus einem geschnittenen Blech gemacht sind, wobei das (oder die) zweite(n) Führungsteil(e) (13) des besagten wenigstens einen Elements und der zweiten Platte (5) einstückig aus einem geschnittenen Blech gemacht sind, wobei das zweite Mittel (7) gebildet ist durch die Zusammenfügung eines ersten Führungsteils (12) und eines zweiten, gegenüberliegenden Führungsteils (13) mittels eines Zusammenfügungs-Mittels (9).

7. Fahrzeug, wie z.B. ein Kraftfahrzeug, aufweisend ein Armaturenbrett und ein Anzeigemittel, **dadurch gekennzeichnet, dass** es ferner aufweist eine Halterung (1) gemäß irgendeinem der vorhergehenden Ansprüche, wobei das Armaturenbrett der Unterbau (3) ist und das Anzeigemittel die Vorrichtung (2) ist, um das Anzeigemittel relativ zu dem Armaturenbrett zu halten.

## Claims

1. Support (1) for a device (2), such as a display means, capable of supporting a device (2) relative to a framework (3), comprising a first plate (4) capable of being fixed to the framework (3), a second plate (5) capable of being fixed to the device (2), and a connecting means (6, 7) for connecting the second plate (5) to the first plate (4), wherein the connecting means (6, 7) is capable of allowing the two plates (4, 5) to move towards one another under the effect of an impact (C) exerted on the device (2) and tending to move the second plate (5) towards the first plate (4), by offering a resistance that is at most equal to a first force, and is also capable of preventing the two plates (4, 5) from being moved apart under the effect of a pulling force (T) exerted on the device (2) and tending to move the second plate (5) away from the first plate (4), at least as long as said pulling force (T) is at most equal to a second force, wherein
- the connecting means (6, 7) comprises a first connecting means (6) capable of allowing the two plates (4, 5) to move towards one another under the effect of an impact (C) exerted on the device (2) in a first direction (D1) tending to move the second plate (5) towards the first plate (4), by offering a resistance that is at most equal to a first force, and a second connecting means (7) capable of preventing the two plates (4, 5) from being moved apart under the effect of a pulling force (T) exerted on the device (2) in a second direction (D2) tending to move the second plate (5) away from the first plate (4), at least as long as said pulling force is at most equal to a second force,
- the second connecting means (7) comprises at least one element of which a first end (10) is integral with the first plate (4) and a second end (11) is integral with the second plate (5), said element being rigid under tension and flexible under compression,
**characterised in that**
the element comprises a first slide (12) integral with the first plate (4), a second slide (13) integral with the second plate (5), and an assembly means (9) for assembling the two slides (12, 13) so as to allow the two slides (12, 13) to slide relative to one another under compression and to prevent the two slides (12, 13) from sliding relative to one another under tension.

2. Support (1) according to claim 1, wherein the two plates (4, 5) are moved towards one another by a rotation.

3. Support (1) according to claim 1 or claim 2, wherein the second connecting means (7) is also capable of offering substantially no resistance to a force exerted in the first direction (D1).

4. Support (1) according to any one of the preceding claims, wherein the first connecting means (6) is a deformable means arranged between the two plates (4, 5).

5. Support (1) according to claim 4, wherein the first plate (4), the second plate (5) and the first connecting means (6) are produced in one piece from a cut metal sheet, the first means (6) being formed by a fold (8) of said cut metal sheet.

6. Support (1) according to any one of the preceding claims, wherein the first slide(s) (12) of said at least one element and the first plate (4) are produced in one piece from a cut metal sheet, and the second slide(s) (13) of said at least one element and the second plate (5) are produced in one piece from a cut metal sheet, the second means (7) being formed by the assembly of a first slide (12) and a second slide (13) facing it, by means of an assembly means (9).

7. Vehicle, such as a motor vehicle, comprising a dashboard and a display means, **characterised in that** it also comprises a support (1) according to any one of the preceding claims, the dashboard being the framework (3), and the display means being the device (2), in order to support the display means relative to the dashboard.
